# EUROPÄISCHE PATENTSCHRIFT

(11) **EP 2 469 821 B1**
(45) Veröffentlichungstag und Bekanntmachung des Hinweises auf die Patenterteilung: **10.09.2014**
(21) Anmeldenummer: 11005594.4
(22) Anmeldetag: 08.07.2011
(51) Int. Cl.: H04L 12/58, G06F 9/44, H04M 7/00, H04M 3/42

(54) **Verfahren zur automatischen Übertragung einer Information zur Inbetriebnahme eines für die Textkommunikation eingerichteten Kommunikationsendgerätes an ein für die Sprachkommunikation eingerichtetes Kommunikationsendgerät**
Method for automatic transmission of information regarding the start-up of a communication terminal suitable for text communication to a communication terminal suitable for speech communication
Procédé de transmission automatique d'une information pour la mise en service d'un terminal de communication de texte à un terminal de communication de voix

(30) Priorität: 23.12.2010 EP 10016050
(43) Veröffentlichungstag der Anmeldung: 27.06.2012
(60) Teilanmeldung: 14001981.1
(73) Patentinhaber: Unify GmbH & Co. KG, 81379 München (DE)
(72) Erfinder: Rist, Claus, 44795 Bochum (DE); Cordes, Sebastian, 58642 Iserlohn (DE); Fischer, Stephan, 45549 Sprockhövel (DE)
(74) Vertreter: Fritzsche, Thomas

(56) Entgegenhaltungen:
- EP-A2- 1 499 097
- WO-A1-2006/059206
- US-A1- 2007 016 640
- Siemens Enterprise Communications Gmbh & Co. Kg: "Information - OpenScape MobileConnect", , 1. Mai 2010 (2010-05-01), Seiten 1-6, XP55011050, Hofmannstr. 51, D-80200 München Gefunden im Internet: URL:http://ipbx.com.au/getmedia/a659382f-6 5bf-4012-aa60-a4465c5f8b49/OpenScape_Mobil eConnect_V3_Data_Sheet.aspx?disposition=at tachment [gefunden am 2011-11-02]
- "OpenScape V1.0 Technical White Paper", INTERNET CITATION, April 2003 (2003-04), XP002322314, Gefunden im Internet: URL:http://www.siemens.com/Daten/siecom/HQ /ICN/Internet/Enterprise_Networ ks/WORKAREA/kasprzyk/templatedata/English/ document/binary/openscape_t echnicalwhitepaper_1091757.pdf [gefunden am 2005-03-24]

## Beschreibung

Die Erfindung betrifft ein Verfahren zur automatischen Übertragung einer Information zur Inbetriebnahme eines ersten, für die Textkommunikation eingerichteten Kommunikationsendgerätes an wenigstens ein zweites, für die Sprachkommunikation eingerichtetes Kommunikationsendgerät, bei dem die Sprachkommunikation zwischen Kommunikationsendgeräten über wenigstens einen Sprachkommunikationsserver und die Textkommunikation zwischen Kommunikationsendgeräten über wenigstens einen Textkommunikationsserver vermittelt wird. Die Erfindung betrifft außerdem eine Anordnung zur automatischen Übertragung einer Information zur Inbetriebnahme wenigstens eines ersten, für die Textkommunikation eingerichteten Kommunikationsendgerätes an wenigstens ein zweites, für die Sprachkommunikation eingerichtetes Kommunikationsendgerät, mit wenigstens einem Textkommunikationsserver zur Vermittlung der Textkommunikation zwischen Kommunikationsendgeräten und wenigstens einem Sprachkommunikationsserver zur Vermittlung der Sprachkommunikation zwischen Kommunikationsendgeräten.

Die Integration von Telekommunikationsnetzen und Datennetzen gewinnt zunehmend an Bedeutung. Telekommunikationsnetze dienen hauptsächlich der Kommunikation von Telekommunikationsteilnehmern mit Hilfe von Telekommunikationsendgeräten wie beispielsweise Telefonen. Datennetze dienen hauptsächlich der Vernetzung von Computern, beispielsweise von PCs mit sogenannten Servern. Verfahren und Anordnungen, bei denen auf Computern installierte Anwendungen Kommunikationsanlagen und Kommunikationsverbindungen steuern und überwachen, sind allgemein als CTI-Lösungen (CTI = Computer Telephony Integration) bekannt. Dabei können einerseits Anschlüsse von Kommunikationsanlagen und andererseits Verbindungen zwischen den Anschlüssen gesteuert und überwacht werden. Bei den Verbindungen handelt es sich jeweils um temporäre Kommunikationskanäle zwischen zwei oder mehreren Teilnehmern einer Kommunikationsanlage oder mehrerer Kommunikationsanlagen.

Beim Betrieb einer CTI-Lösung werden jeweils Daten mit Steuerund Zustandsinformationen zwischen einer Kommunikationsanlage und einer CTI-Anwendung (CTI-Anwendungsprogramm) übertragen. Dazu verfügen die Kommunikationsanlagen über spezielle Schnittstellen zum Austausch der Daten, die CTI-Schnittstellen. Ebenso verfügen die Anwendungen bzw. die PCs über eine entsprechende CTI-Schnittstelle für diesen Datenaustausch. Hierzu sind die CTI-Schnittstellen der Kommunikationsanlage und die der Anwendung über eine Datenleitung oder über ein Datennetz miteinander verbunden. Da die maximale Anzahl von CTI-Schnittstellen an einer Kommunikationsanlage beschränkt ist, wird zwischen der Kommunikationsanlage und den Anwendungen häufig ein Telefonie-Server geschaltet.

Die Druckschrift WO 98/51092 A1 "Computer telephony integration gateway" zeigt ein öffentliches Kommunikationsnetzwerk mit mehreren Kommunikationsanlagen und ein privates Kommunikationsnetzwerk mit mehreren Domänen, die jeweils Rechner mit Anwendungen zur Steuerung und/ oder Überwachung von Ressourcen des öffentlichen Kommunikationsnetzwerks aufweisen. Die gezeigte Anordnung weist als Umwertungseinrichtung einen "CTI-Gateway" auf, welches die zur Steuerung und/oder Überwachung der Ressourcen vom öffentlichen Kommunikationsnetzwerk zum privaten Kommunikationsnetzwerk versendeten Daten derart verändert, dass sich diese Daten als die Daten einer einzigen öffentlichen Kommunikationsanlage darstellen, und umgekehrt die Daten, die vom privaten Kommunikationsnetzwerk mit den Anwendungen zum öffentlichen Kommunikationsnetzwerk versendet werden, derart verändert, als ob sie aus einem privaten Kommunikationsnetzwerk mit nur einer Anwendung gesendet worden wären.

Die DE 101 59 636 B4 beschreibt ein Verfahren zur Steuerung und/oder Überwachung von Ressourcen und Verbindungen mittels Austausch von Daten zwischen Kommunikationsanlagen und mindestens einer Anwendung, wobei die Daten jeweils ein die Ressourcen und Verbindungen unterscheidendes Kennzeichen aufweisen, wobei die Kennzeichen der Ressourcen beim Austausch jeweils derart umgewertet werden, dass sie sich für die eine oder jede Anwendung als Kennzeichen einer einzigen Kommunikationsanlage mit Teilnehmeranschlüssen darstellen, dadurch gekennzeichnet, dass die Kennzeichen der Verbindung zwischen Ressourcen von verschiedenen Kommunikationsanlagen jeweils eine lokale Verbindungsnummer (Call-ID) der an der Verbindung beteiligten Kommunikationsanlagen und eine globale Verbindungsnummer (Call-ID) umfassen und dass durch die Umwertung die globale Verbindungsnummer (Call-ID) so zur Anwendung übertragen wird, dass diese von der Anwendung nicht von einer lokalen Verbindungsnummer (Call-ID) unterscheidbar ist.

Die US 2007/016 640 A1 offenbart ein Verfahren zur interpersonellen Kontaktaufnahme, die einen Kommunikationsaufbau zwischen wenigstens zwei Personen auf den Wunsch einer dieser Personen hin ermöglicht, indem ein Präsenz-Status jedes Benutzers verwendet wird.

Die Veröffentlichung "Information - OpenScape Mobile Connect" der Siemens Enterprise Communications GmbH & Co. KG vom 1. Mai 2010, Reference No.: A31002-M1020-D100-5-7629, offenbart Erzeugnisse und Verfahren der Siemens Enterprise Communications GmbH & Co. KG zur Verwendung im Zusammenhang mit einer erweiterten vereinheitlichten integrierten Unternehmenskommunikation ("Extended enterprise communications and UC integration"). Die WO 2006/059 206 A1 offenbart ein Verfahren zur Verwaltung von Präsenzinformation in einem paketvermittelten, drahtlosen Kommunikationsnetzwerk.

Die EP 1 499 079 A2 offenbart ein Verfahren und ein System um ein Telefon in die Lage zu versetzen, elektronische Nachrichten zu senden und zu empfangen.

Die Veröffentlichung "OpenScape V1.0 Technical White Paper" der Siemens Information and Communication Networks, Inc. Offenbart ein System von Anwendungen ("application suite") im Zusammenhang mit der SIP-basierten Echtzeitkommunikation (,;SIP-based real-time communications").

Das XMPP-Protokoll ist ein wichtiger bekannter Vertreter sogenannter Instant Messaging Protokolle, die bei der Computer-Telefonie-Integration eine wichtige Rolle spielen. Bekannte auf dem XMPP-Protokoll basierende Client/Server-Architekturen werden asynchron zum Telefon betrieben. Eine automatische Verknüpfung und Inbetriebnahme ist bei bekannten Lösungen nicht vorgesehen.

Eine Aufgabe der vorliegenden Erfindung kann darin gesehen werden, Lösungen für die automatische Inbetriebnahme eines CTI-Servers, der beispielsweise in einer XMPP-Umgebung arbeitet, anzugeben. Diese Aufgabe wird durch ein Verfahren bzw. eine Anordnung nach einem der unabhängigen Patentansprüche gelöst. Vorteilhafte Weiterbildungen der Erfindung sind Gegenstand von Unteransprüchen.

Erfindungsgemäß ist ein Verfahren zur automatischen Übertragung einer Information zur Inbetriebnahme wenigstens eines ersten, für die Textkommunikation eingerichteten Kommunikationsendgerätes an wenigstens ein zweites, für die Sprachkommunikation eingerichtetes Kommunikationsendgerät vorgesehen, bei dem die Sprachkommunikation zwischen Kommunikationsendgeräten über wenigstens einen Sprachkommunikationsserver und die Textkommunikation zwischen Kommunikationsendgeräten über wenigstens einen Textkommunikationsserver vermittelt wird. Der wenigstens eine Sprachkommunikationsserver und der wenigstens eine Textkommunikationsserver tauschen Nachrichten über wenigstens eine Umsetzungseinrichtung aus, und die Inbetriebnahme wird von wenigstens dem einen ersten Kommunikationsendgerät über den wenigstens einen Textkommunikationsserver, die wenigstens eine Umsetzungseinrichtung und den wenigstens einen Sprachkommunikationsserver wenigstens dem einen zweiten Kommunikationsendgerät signalisiert.

Dabei ist es vorgesehen, dass eine Übertragung einer Information zur Signalisierung der Inbetriebnahme zwischen dem Textkommunikationsserver und dem Sprachkommunikationsserver dann erfolgt, wenn der Sprachkommunikationsserver dem Textkommunikationsserver zuvor signalisiert hat, dass die Inbetriebnahme erfolgen soll.

Gemäß einer bevorzugten Ausführungsform der Erfindung, deren Merkmale auch mit Merkmalen anderer Ausführungsformen dieser Erfindung kombiniert werden können, ist es vorgesehen, dass die Übertragung der Information zur Signalisierung der Inbetriebnahme zwischen dem Textkommunikationsserver und dem Sprachkommunikationsserver in einem Umfang erfolgt, der durch eine vorherige Signalisierung spezifiziert worden ist.

Gemäß einer weiteren bevorzugten Ausführungsform der Erfindung, deren Merkmale auch mit Merkmalen anderer Ausführungsformen dieser Erfindung kombiniert werden können, ist es vorgesehen, dass das Verfahren die Übertragung wenigstens einer Information zur Signalisierung der Inbetriebnahme an ein weiteres erstes Kommunikationsendgerät umfasst.

Gemäß einer weiteren bevorzugten Ausführungsform der Erfindung, deren Merkmale auch mit Merkmalen anderer Ausführungsformen dieser Erfindung kombiniert werden können, ist es vorgesehen, dass wenigstens der Sprachkommunikationsserver Nachrichten ohne Aufforderung überträgt.

Erfindungsgemäß ist ferner eine Anordnung zur automatischen Übertragung einer Information zur Inbetriebnahme wenigstens eines ersten, für die Textkommunikation eingerichteten Kommunikationsendgerätes an wenigstens ein zweites, für die Sprachkommunikation eingerichtetes Kommunikationsendgerät vorgesehen, mit wenigstens einem Textkommunikationsserver zur Vermittlung der Textkommunikation zwischen Kommunikationsendgeräten und wenigstens einem Sprachkommunikationsserver zur Vermittlung der Sprachkommunikation zwischen Kommunikationsendgeräten. Dabei ist wenigstens eine Umsetzungseinrichtung vorgesehen, über die wenigstens der eine Sprachkommunikationsserver und der wenigstens eine Textkommunikationsserver Nachrichten austauschen. Die Information zur Inbetriebnahme wenigstens des ersten Kommunikationsendgerätes über den wenigstens einen Textkommunikationsserver, die wenigstens eine Umsetzungseinrichtung und den wenigstens einen Sprachkommunikationsserver wird an wenigstens das eine zweite Kommunikationsendgerät übertragen.

Dabei ist es vorgesehen, dass die Anordnung derart eingerichtet ist, dass eine Übertragung einer Information zur Signalisierung der Inbetriebnahme zwischen dem Sprachkommunikationsserver und dem Textkommunikationsserver dann erfolgt, wenn der Sprachkommunikationsserver dem Textkommunikationsserver zuvor signalisiert hat, dass die Übertragung erfolgen soll.

Gemäß einer bevorzugten Ausführungsform der Erfindung, deren Merkmale auch mit Merkmalen anderer Ausführungsformen dieser Erfindung kombiniert werden können, ist es vorgesehen, dass die Übertragung einer Information zur Signalisierung der Inbetriebnahme zwischen dem Sprachkommunikationsserver und dem Textkommunikationsserver in einem Umfang erfolgt, der durch eine vorherige Signalisierung spezifiziert ist.

Gemäß einer weiteren bevorzugten Ausführungsform der Erfindung, deren Merkmale auch mit Merkmalen anderer Ausführungsformen dieser Erfindung kombiniert werden können, ist es vorgesehen, dass wenigstens eine an ein weiteres erstes Kommunikationsendgerät übertragene Information zur Signalisierung der Inbetriebnahme wenigstens eine Betriebsinformation beinhaltet.

Gemäß einer weiteren bevorzugten Ausführungsform der Erfindung, deren Merkmale auch mit Merkmalen anderer Ausführungsformen dieser Erfindung kombiniert werden können, ist es vorgesehen, dass wenigstens der Sprachkommunikationsserver Nachrichten ohne Aufforderung überträgt.

Je nach Ausführungsform ist es ein Vorteil der erfindungsgemäßen Lösung, dass ein Verfahren zur automatischen Inbetriebnahme eines für die Sprachkommunikation eingerichteten Kommunikationsendgerätes an einem für die Textkommunikation eingerichteten Kommunikationsendgerät sozusagen als "Machine to Machine" Kommunikation selbständig (automatisch) eine versionsabhängige CTI-Steuerung in Betrieb nehmen kann ohne dass hierzu Parameter konfiguriert werden müssen. Beide "Maschinen", d.h. der Switch (die PBX) und der XMPP Server teilen ihre CTI-Fähigkeiten mit und adaptieren sich selbständig (automatisch) auf die Möglichkeiten des jeweiligen Partners ohne Eingriff von außen (aushandeln von Fähigkeiten). Das bedeutet: ein Benutzer muss (im Allgemeinen und bei Start/Restart) keine Anmeldeprozedur (wie z.B. eine Konfiguration bei einem Setup/Installation eines Programms wie Microsoft Word) durchlaufen. Die Erfindung bietet somit die Basis einer Synchronisation zwischen (Switch/PBX = Voice Server und XMPP Server = Presence Server) und verheiratet sozusagen Voice und Presence (ähnlich der Hochzeit zwischen Motor und Karosserie).

Im Folgenden wird die Erfindung anhand bevorzugter Ausführungsbeispiele und mit Hilfe der Figuren näher beschrieben.

Dabei zeigt
Fig. 1 in schematischer Weise eine erste Anordnung von Systemkomponenten zur Durchführung eines Ausführungsbeispiels eines erfindungsgemäßen Verfahrens;
Fig. 2 in schematischer Weise eine zweite Anordnung von Systemkomponenten zur Durchführung eines Ausführungsbeispiels eines erfindungsgemäßen Verfahrens;
Fig. 3 in schematischer Weise einen Ablauf von Schritten eines Verfahrens gemäß einem ersten Ausführungsbeispiel der Erfindung;
Fig. 4 in schematischer Weise einen Ablauf von Schritten eines Verfahrens gemäß einem zweiten Ausführungsbeispiel der Erfindung;
Fig. 5 in schematischer Weise einen Ablauf von Schritten eines Verfahrens gemäß einem dritten Ausführungsbeispiel der Erfindung;
Fig. 6 in schematischer Weise eine dritte Anordnung von Systemkomponenten zur Durchführung eines Ausführungsbeispiels eines erfindungsgemäßen Verfahrens;
Fig. 7 in schematischer Weise eine vierte Anordnung von Systemkomponenten zur Durchführung eines Ausführungsbeispiels eines erfindungsgemäßen Verfahrens;
Fig. 8 in schematischer Weise eine fünfte Anordnung von Systemkomponenten zur Durchführung eines Ausführungsbeispiels eines erfindungsgemäßen Verfahrens.

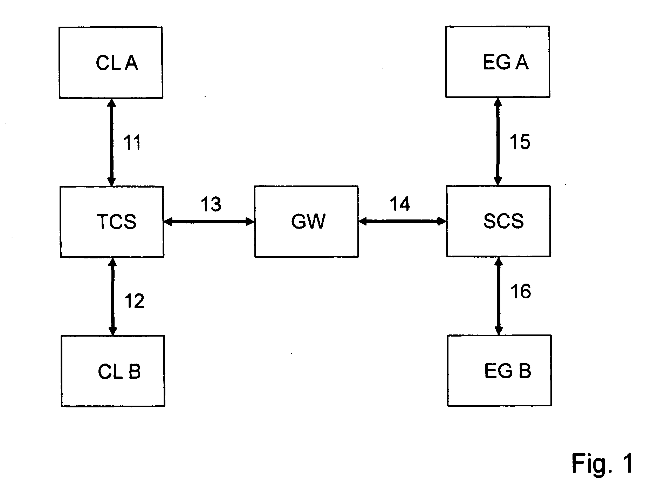

Ein bevorzugtes Ausführungsbeispiel einer erfindungsgemäßen Anordnung stellt Fig. 1 dar. Ein Sprachkommunikationsserver SCS steht in diesem Beispiel mit zwei für die Sprachkommunikation eingerichteten Endgeräten EGA und EGB in Verbindung, und tauscht mit diesen beiden Kommunikationsendgeräten Sprachnachrichten und Zustandsinformationen 15, 16 aus. Ändert sich beispielsweise der Zustand des Kommunikationsendgerätes EGA, dann überträgt dieses Kommunikationsendgerät EGA eine entsprechende Zustandsinformation an den Sprachkommunikationsserver SCS, woraufhin dieser die Zustandsinformation oder eine entsprechende Zustandsänderungsinformation 14 an die Umsetzungseinrichtung GW überträgt. Die Umsetzungseinrichtung GW überträgt daraufhin eine entsprechende Zustandsinformation oder Zustandsänderungsinformation 13 an den Textkommunikationsserver TCS, mit dem die beiden Textkommunikations-Clients CLA und CLB kommunizieren 11, 12. In diesem Beispiel wird der Textkommunikations-Client CLA von dem Kommunikationsteilnehmer genutzt, der auch das Sprachkommunikationsendgerät EGA benutzt. Entsprechend wird der Textkommunikations-Client CLB von dem Kommunikationsteilnehmer genutzt, der auch das Sprachkommunikationsendgerät EGB benutzt.

Auf diese Weise wird es möglich, dass der Kommunikationsteilnehmer, welcher den Textkommunikations-Client CLB verwendet, von einer Zustandsänderung des Sprachkommunikationsendgerätes EGA informiert wird, ohne dass der Benutzer A hierzu manuell eine Nachrichtenübertragung an den Benutzer B einleiten muss.

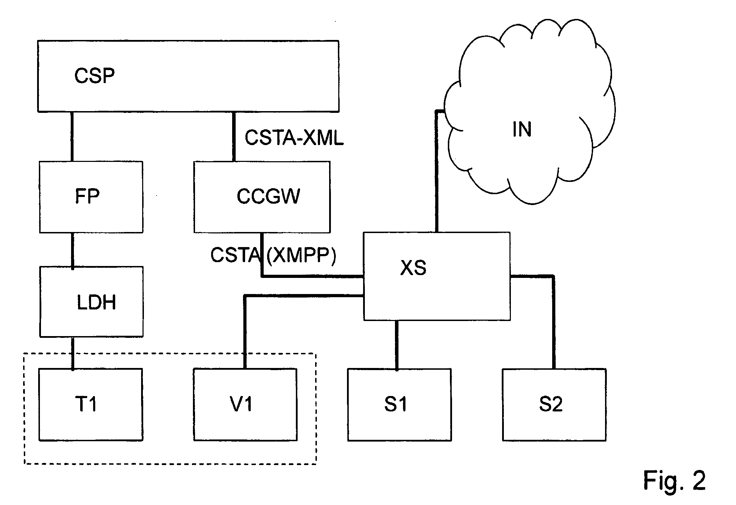

Die Fig. 2 dargestellte Einbettung des Call Control Gateway CCGW im Gesamtsystem ausgeführt beispielhaft in Form der OpenScape Office MX ist exemplarisch und steht stellvertretend für die allgemeine erfinderische Idee, bei der das Verfahren zur automatischen Übertragung einer Information zur Inbetriebnahme wenigstens eines ersten, für die Textkommunikation eingerichteten Kommunikationsendgerätes (CL A, CL B) an wenigstens ein zweites, für die Sprachkommunikation eingerichtetes Kommunikationsendgerät (EG A, EG B), bei dem die Sprachkommunikation zwischen Kommunikationsendgeräten über wenigstens einen Sprachkommunikationsserver (SCS) und die Textkommunikation zwischen Kommunikationsendgeräten über wenigstens einen Textkommunikationsserver (TCS) vermittelt wird, wobei vorgesehen ist, dass der wenigstens eine Sprachkommunikationsserver (SCS) und der wenigstens eine Textkommunikationsserver (TCS) Nachrichten über wenigstens eine Umsetzungseinrichtung (GW) austauschen, und dass die Inbetriebnahme von wenigstens dem ersten Kommunikationsendgerät (CL A, CL B) über den wenigstens einen Textkommunikationsserver (TCS), die wenigstens eine Umsetzungseinrichtung (GW) und dem wenigstens einen Sprachkommunikationsserver (SCS) dem wenigstens zweiten Kommunikationsendgerät (EG A, EG B) signalisiert wird.

In diesem Ausführungsbeispiel besteht der Sprachkommunikationsserver SCS u.a. aus einem CSTA Servcice Provider (CSP), einem Feature Processing (FP) und einem LAN Device Handler (LDH). Die Bezugszeichen EG A, EG B bezeichnen Endgeräte wie dargestellt, GW bezeichnet ein Call Control Gateway (CCGW), der Textkommunikationsserver (TCS) ist in diesem Beispiel ein XMPP Server - Openfire, und die Clients CL A, CL B sind beispielhaft durch XMPP Clients - Spark (S1, S2) repräsentiert. Dabei ist es möglich aber nicht erforderlich, dass die vorher beschriebenen Komponenten physikalisch voneinander getrennt sind oder sich innerhalb einer begrenzten Domain befinden.

Der Kommunikationskanal (13) zwischen dem CCGW (GW) und dem XMPP (TCS) Server kann durch eine XMPP Server/Server Verbindung realisiert werden, wobei das CCGW als eigenständiger XMPP Server agiert. Andernfalls kann er durch eine XMPP Client/Server Verbindung realisiert werden, wobei das CCGW als Client im XMPP Server (z.B. Openfire) administriert ist. Eine dritte Möglichkeit besteht darin, dass das CCGW eine Serverkomponente des XMPP Servers ist, beispielsweise gemäß XEP 0114. Der Kommunikationskanal (13) zwischen dem CCGW (GW) und dem XMPP (TCS) Server steht ebenfalls beispielhaft für die Übertragung einer Information zur Inbetriebnahme von wenigstens einem ersten Kommunikationsendgerät (CL A, CL B) über den wenigstens einen Textkommunikationsserver (TCS), die wenigstens eine Umsetzungseinrichtung (GW) und dem wenigstens einen Sprachkommunikationsserver (SCS) an das wenigstens zweite Kommunikationsendgerät (EG A, EG B).

Die PBX, ein vermittlungstechnisches System, und der Instant Messaging Server XS, beispielsweise ein XMPP Server, werden mittels eines Call Control Gateways CCGW verbunden. Das CCGW ist die Verbindung zwischen der CTI einer PBX und dem XMPP Server. Über dieses Call Control Gateway kann ein XMPP Client CTI Dienste abonnieren und zur Verfügung stellen. Hierbei handelt es sich in einer Ausführungsform der Erfindung vorzugsweise um die in ECMA-269 (Standard ECMA-269 Services for Computer Supported Telecommunications Applications (CSTA) Phase III, 8th edition (June 2009)) beschriebenen CSTA Call Control Services und Events. Dieses Dokument (http://www.ecmainternational.org/publications/standards/Ecma-269.htm) wird zum Bestandteil der vorliegenden Beschreibung gemacht.

Auf der einen Seite erfolgt die Anbindung an das Feature Processing via CSTA XML mittels eines sogenannten CSTA Service Providers (CSP). Auf der anderen Seite wird CSTA über XMPP an den XMPP Server (im Ausführungsbeispiel gemäß der Figur: Openfire) übertragen. Mittels des CCGW kann ein XMPP Client (im Ausführungsbeispiel gemäß der Figur: Spark) CTI Dienste abonnieren.

Um eine automatische Inbetriebnahme der CTI Funktionalität zu gewährleisten, werden vorzugsweise folgende Schritte durchlaufen:

### Schritt 1:

Bei seiner Anmeldung beim Server fragt der Client durch den Service Discovery (in einer Ausführungsform gemäß XEP-0030) die Eigenschaften des Servers ab. Die Antwort beinhaltet u.a. ein oder mehrere <feature/> Elemente. Jedes dieser Elemente umfasst ein "var" Attribut, welches den unterstützten Namespace repräsentiert. Innerhalb dieses zur Verfügung stehenden Namespace wird die mögliche CTI Funktionalität ergänzt.

Beinhaltet die Antwort innerhalb der enthaltenen <feature/>-Elemente einen Hinweis auf eine allgemeine oder versionsspezifische CTI Unterstützung, ermöglicht ein positives Prüfungsergebnis (der Client unterstützt diese CTI Version) die Anforderung von CTI Diensten beim Server mittels query-Stanza vom ermittelten Namespace, gekapselt in eine IQ-Stanza vom Typ "Get".

Sollte die Antwort des Servers mehrere CTI Versionen enthalten, die auch der Client unterstützt, so liegt es in der Implementierung des Clients die Wahl anhand einer Prioritätsliste mit priorisierten CTI Versionen bzw. Namespaces durchzuführen oder auch den in der Antwort als ersten genannten Namespace zu wählen.

Bei einer allgemeinen CTI Unterstützung des Servers erfolgt die CTI Versionsprüfung erst nach der Anforderung der CTI Funktionalität.

### Schritt 2:

Auf Service Discovery (in einer Ausführungsform gemäß XEP-0030) eines Clients meldet der Server die CTI Versionen die er unterstützt über den für die <feature/> Elemente festzulegenden Namespace.

Je nach Ausführungsbeispiel der Erfindung erfolgt vorzugsweise eine Unterstützung der CSTA XML Edition 3 (< feature var = "http://www.ecma-international.org/standards/ecma-323/csta/ed3" />) oder der CST XML Edition 5 (< feature var = "http://www.ecma-international.org/standards/ecma-323/csta/ed5" />).

Eine konkrete Unterstützung einer CTI Version ermöglicht es dem Server seinerseits Validitätsprüfungen auszuführen. Eine Art der Validitätsprüfung ist die positive Zuordnung des angeforderten CTI Service zur JabberID und der dem Client zugeordneten Rufnummer. Dieses ermöglicht dem Server Entscheidungen über die Qualität der CTI Verbindung (1st party oder 3rd party) zu treffen.

Bei einer 1st party CTI Verbindung darf der Client ausschließlich CTI Services für die der JabberID zugeordneten Rufnummer ausführen, andere Service Anforderungen würden abgewiesen. Bei einer 3rd party CTI Verbindung darf der Client für beliebige Rufnummern CTI Services ausführen.

Unterstützt der Server keine konkrete CTI Version kann der Server die CTI Versionsprüfung dem CCGW bzw. der nachgeschalteten CTI Instanz überlassen.

Auf die CTI Anforderung durch den Client mittels IQ gibt der Server den Status des CCGW sowie die dem Client zugeordneten Rufnummern (Devicelist) zurück.

Um Vernetzungsszenarien zu ermöglichen kann optional diese Antwort auch auf einen anderen Server verweisen, der seinerseits CTI Funktionalität unterstützt. In diesem Fall liefert die Antwort keine Devicelist und der Status des CCGW ist mit "unknown" gekennzeichnet. Das weitere Vorgehen des Clients besteht darin erneut mit Service Discovery bei dem nun bekannten Server zu beginnen.

Eine weitere Möglichkeit der Vernetzung ist die Unterstützung von mehreren CCGW durch einen einzelnen Server.

Erhält der Server vom CCGW eine Login/Logoff Meldung, sendet der Server eine Status Meldung an alle Clients, die CTI Funktionalität abonniert haben. Diese Status Meldung wird ebenfalls vom Server erzeugt, wenn die Verbindung zum CCGW abgebrochen ist.

### Schritt 3:

Mit dem Login beim Server wird die CTI Verbindung zur Verfügung gestellt. Das CCGW prüft die CTI Version und bricht die Verbindung ab, wenn das CCGW diese CTI Version nicht unterstützt. Gegebenfalls überlässt das CCGW die CTI Versionsprüfung der nachgeschalteten CTI Instanz.

Optional kann der direkte Präsenz-Status zur Unterstützung der automatischen Inbetriebnahme verwendet werden.

### a) Verfügbarkeit des CCGW

Nach dem Start des CCGW sendet dieses eine direkte Präsenznachricht an den XMPP Server, der die CTI Funktionalität zur Verfügung stellt. Daraufhin setzt der XMPP Server einen Mechanismus in Gang, der alle bereits angemeldeten CTI fähigen Clients, die diesem CCGW zugeordnet sind, darüber informiert, dass das CCGW nun verfügbar ist (dieses ist sinnvoll, wenn dem XMPP Server mehrere CCGW zur Verfügung stehen).

Bricht nun die Verbindung zwischen CCGW und dem CTI verwaltenden XMPP Server unerwartet zusammen, so erhält der XMPP Server die Präsenznachricht, die ihn darüber informiert, dass das CCGW nun nicht mehr verfügbar ist. Dies erlaubt dem XMPP Server auch alle angemeldeten Clients, die dieses CCGW zugewiesen bekommen haben, darüber zu informieren, dass ihr CCGW aktuell nicht mehr verfügbar und somit die CTI Funktionalität unterbrochen ist.

### b) Verfügbarkeit eines CSTA fähigen Clients

Erhält ein Client von einem XMPP Server eine Statusmeldung, die besagt, dass das zugewiesene CCGW nun erreichbar ist (unabhängig davon, ob die Statusmeldung die Antwort des XMPP Servers auf die Anforderung auf CTI Dienste ist, oder ob die Statusmeldung ein Resultat eines nachträglich verfügbaren CCGW ist), so sendet der Client eine direkte Präsenznachricht an das CCGW. Dies zwingt den XMPP Server dazu das CCGW darüber zu informieren, wenn der Client nicht mehr verfügbar ist, auch ohne, dass sich das CCGW im Roster (Kontaktliste) des Clients befindet.

Wird das CCGW darüber informiert, dass einer seiner Clients nicht mehr verfügbar ist, so wird überprüft, ob dieser Client einen Monitorpunkt gesetzt hat. Ist dies der Fall, so kann automatisch ein "MonitorStop" stellvertretend für den Client an die nachgeschaltete CTI Instanz gesendet werden.

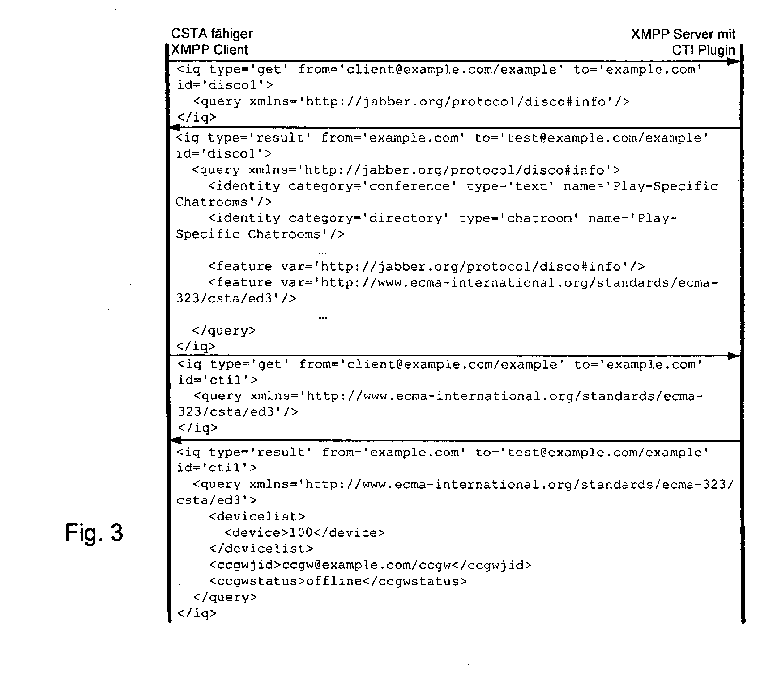

Die Figuren 3, 4 und 5 zeigen Ausführungsbeispiele für den Service Discovery und das anschließende Anfordern von CTI Diensten

In Figur 3 sendet der durch die linke vertikale Linie dargestellte CSTA-fähige XMPP Client im Rahmen der Service Discovery eine Nachricht an den durch die rechte vertikale Linie dargestellten XMPP Server mit CTI Plugin. Der CTIfähige XMPP Server beantwortet diese Anfrage. Darauf erkennt der Client die CTI Eignung des XMPP Servers und fordert einen CTI Dienst an, worauf der XMPP Server antwortet mit zugewiesenem Device, Adresse und Status des CCGW.

Im Folgenden wird die An- und Abmeldung des CCGW während bereits Clients angemeldet sind anhand von Ausführungsbeispielen der Erfindung beschrieben.

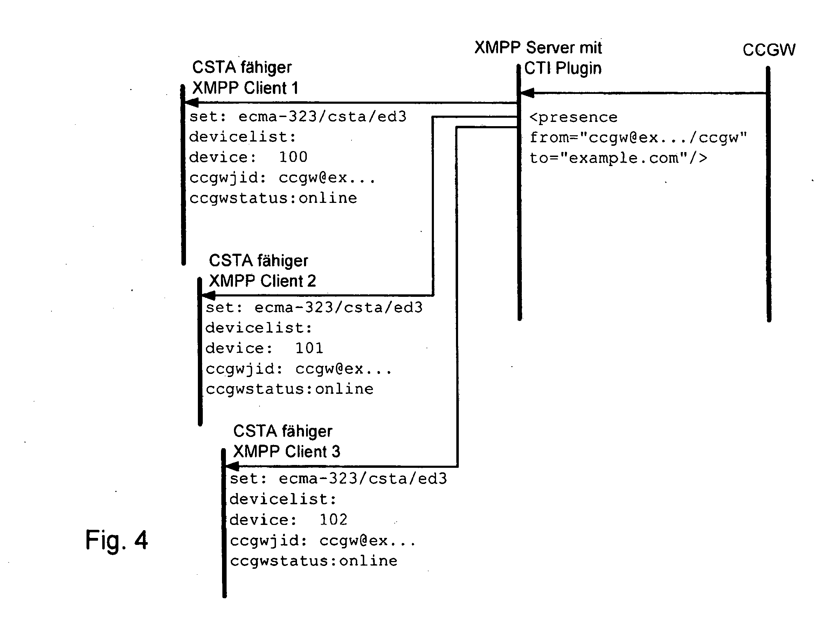

Dem in Figur 4 gezeigten Ausführungsbeispiel liegt die Annahme zugrunde, dass die drei Clients bereits ihre Anmeldung am XMPP Server wie vorstehend beschrieben durchgeführt haben.

Aus Gründen der Übersichtlichkeit werden hier die Nachrichten zwischen XMPP Server und den drei CSTA fähigen Clients verkürzt dargestellt, und es wird die Quittierung (IQ-Stanza vom Typ "result" und darin ein query-Stanza vom Namespace http://www.ecma-international.org/standards/ecma-323/csta/ed3 ) seitens der Clients nicht dargestellt.

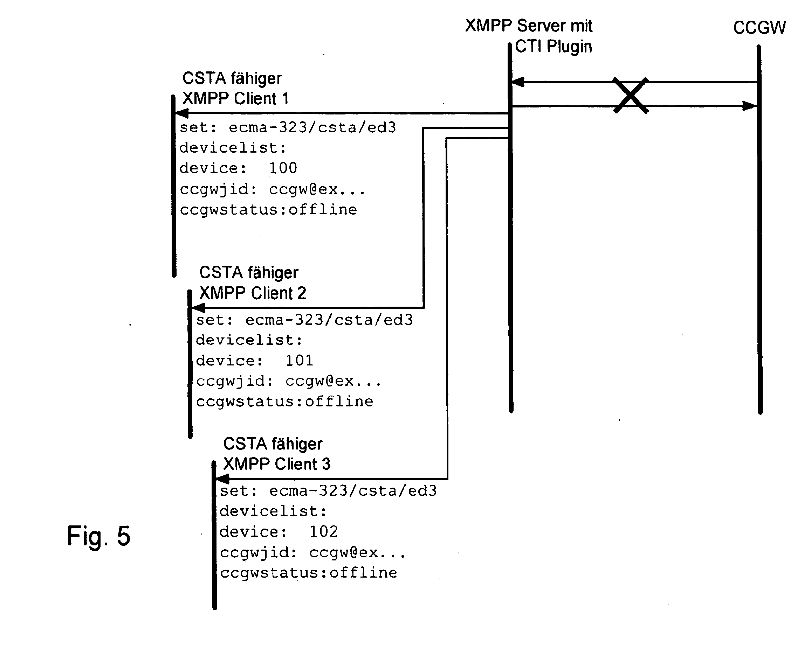

Figur 4 zeigt die Anmeldung des CCGW mit Hilfe einer direkten Präsenznachricht bei einem XMPP Server. Figur 5 zeigt den Nachrichtenfluss bei einem unerwarteten Zusammenbruch der Verbindung zwischen dem CCGW und dem XMPP Server.

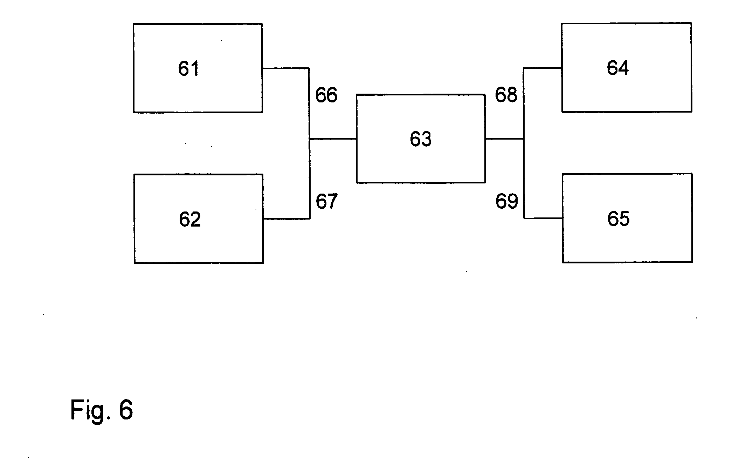

Die Figuren 6, 7 und 8 zeigen möglichen Vernetzungsszenarien im Zusammenhang mit der Erfindung anhand verschiedener Ausführungsbeispiele. Bei dem in der Figur 6 gezeigten Ausführungsbeispiel hat ein Server 63, vorzugsweise ein XMPP Server mit einem Konfigurations-Plugin für CSTA über XMPP, zwei unterschiedliche CCGWs 64, 65 zugewiesen, mit denen er vorzugsweise über die Nachrichtenwege 68, 69 kommuniziert. Der Server 63 kommuniziert vorzugsweise über die Nachrichtenwege 66, 67 mit den Clients 61, 62, die vorzugsweise XMPP Clients mit einem CTI Plugin sind. Im Konfigurations-Plugin wird vorzugsweise eingestellt, an welches CCGW die Nachrichten eines Clients weitergeleitet werden.

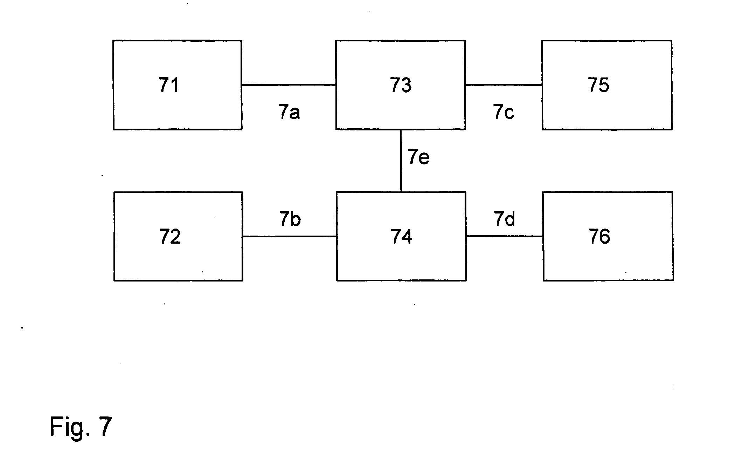

Bei dem in der Figur 7 gezeigten Ausführungsbeispiel hat jeder der beiden Server 73, 74 ein CCGW 75, 76 in der eigenen Domain. Die Server 73 und 74 sind vorzugsweise XMPP Server. Die Nachrichtenwege 7a, 7b, 7c, 7d und 7e deuten die Nachrichtwege an, über die die Einheiten 71, 72, 73, 74, 75 und 76 miteinander kommunizieren. Vorzugsweise ist die Möglichkeit vorgesehen, dass auch das CCGW einer anderen Domain genutzt werden kann. Hierdurch wird es beispielsweise möglich, dass der Client 72 bzw. der Client 71 das CCGW 75 bzw. 76 nutzt, obwohl sich beide in unterschiedlichen Domains befinden. Die Clients 71 und 72 sind vorzugsweise XMPP Clients.

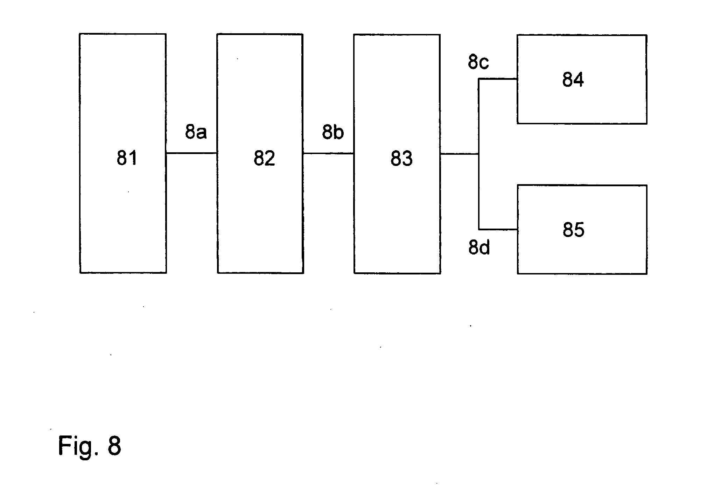

Bei dem in der Figur 8 gezeigten Ausführungsbeispiel besitzt der Server 82 des Clients 81 nicht das vollständige Konfigurations-Plugin, sondern ein reduziertes Konfigurations-Plugin, welches den Client 81 auf einen anderen Server 83 mit dem vollständigen Plugin verweist. 75, 76 in der eigenen Domain. Die Nachrichtenwege 8a, 8b, 8c und 8d deuten die Nachrichtwege an, über die die Einheiten 81, 82, 83, 84 und 85 miteinander kommunizieren. Die Server 82 und 83 sind vorzugsweise XMPP Server. Der Client 81 ist vorzugsweise ein XMPP Client.

Die beispielhafte Einbettung im Gesamtsystem am Beispiel der OpenScape Office MX steht stellvertretend für einen allgemeinen Ansatz bei dem das Verfahren zur automatischen Übertragung einer Information zur Inbetriebnahme wenigstens eines ersten, für die Textkommunikation eingerichteten Kommunikationsendgerätes (CL A, CL B) an wenigstens ein zweites, für die Sprachkommunikation eingerichtetes Kommunikationsendgerät (EG A, EG B), bei dem die Sprachkommunikation zwischen Kommunikationsendgeräten über wenigstens einen Sprachkommunikationsserver (SCS) und die Textkommunikation zwischen Kommunikationsendgeräten über wenigstens einen Textkommunikationsserver (TCS) vermittelt wird, dadurch gekennzeichnet, dass der wenigstens eine Sprachkommunikationsserver (SCS) und der wenigstens eine Textkommunikationsserver (TCS) Nachrichten über wenigstens eine Umsetzungseinrichtung (GW) austauschen, und dass die Inbetriebnahme von wenigstens dem einen ersten Kommunikationsendgerät (CL A, CL B) über den wenigstens einen Textkommunikationsserver (TCS), die wenigstens eine Umsetzungseinrichtung (GW) und dem wenigstens einen Sprachkommunikationsserver (SCS) an das wenigstens zweite Kommunikationsendgerät (EG A, EG B) übertragen wird.

Die Komponenten der OpenScape Office MX sind vorzugsweise:
- SCS:: bestehend u.a. aus CSTA Servcice Provider (CSP), Feature Processing (FP) und LAN Device Handler (LDH)
- EG A, EG B:: Kommunikationsendgeräte
- GW:: Call Control Gateway (CCGW)
- TCS:: XMPP Server - Openfire
- CL A, CL B:: XMPP Clients - Spark

Dabei ist es nicht erforderlich, dass die vorher beschriebenen Komponenten physikalisch voneinander getrennt sind oder sich innerhalb einer begrenzten Domain befinden müssen.

Der Kommunikationskanal zwischen dem CCGW und dem XMPP Server ist vorzugsweise realisiert:
- entweder durch eine XMPP Server ⇔ Server Verbindung, d.h. das CCGW agiert als eigenständiger XMPP Server;
- oder durch eine XMPP Client ⇔ Server Verbindung, d.h. das CCGW ist als Client im XMPP Server (z.B. Openfire) administriert
- oder als eine Serverkomponente z.B. gemäß XEP 0114, d.h. das CCGW ist eine Serverkomponente des XMPP Servers.

## Patentansprüche

1. Verfahren zur automatischen Übertragung einer Information zur Inbetriebnahme wenigstens eines ersten, für die Textkommunikation eingerichteten Kommunikationsendgerätes (CL A, CL B) an wenigstens ein zweites, für die Sprachkommunikation eingerichtetes Kommunikationsendgerät (EG A, EG B), bei dem die Sprachkommunikation zwischen Kommunikationsendgeräten über wenigstens einen Sprachkommunikationsserver (SCS) und die Textkommunikation zwischen Kommunikationsendgeräten über wenigstens einen Textkommunikationsserver (TCS) vermittelt wird, wobei
der wenigstens eine Sprachkommunikationsserver (SCS) und der wenigstens eine Textkommunikationsserver (TCS) Nachrichten über wenigstens eine Umsetzungseinrichtung (GW) austauschen, und wobei die Inbetriebnahme von wenigstens dem einen ersten Kommunikationsendgerät (CL A, CL B) über den wenigstens einen Textkommunikationsserver (TCS), die wenigstens eine Umsetzungseinrichtung (GW) und den wenigstens einen Sprachkommunikationsserver (SCS) wenigstens dem einen zweiten Kommunikationsendgerät (EG A, EG B) signalisiert wird,
**dadurch gekennzeichnet, dass** eine Übertragung einer Information zur Signalisierung der Inbetriebnahme zwischen dem Textkommunikationsserver (TCS) und dem Sprachkommunikationsserver (SCS) dann erfolgt, wenn der Sprachkommunikationsserver (SCS) dem Textkommunikationsserver zuvor signalisiert hat, dass die Inbetriebnahme erfolgen soll.

2. Verfahren nach Anspruch 1, **dadurch gekennzeichnet, dass** die Übertragung der Information zur Signalisierung der Inbetriebnahme zwischen dem Textkommunikationsserver (TCS) und dem Sprachkommunikationsserver (SCS) in einem Umfang erfolgt, der durch eine vorherige Signalisierung spezifiziert worden ist.

3. Verfahren nach einem der vorhergehenden Ansprüche, **dadurch gekennzeichnet, dass** das Verfahren die Übertragung wenigstens einer Information zur Signalisierung der Inbetriebnahme an ein weiteres erstes Kommunikationsendgerät (CL A, CL B) umfasst.

4. Verfahren nach einem der vorhergehenden Ansprüche **dadurch gekennzeichnet, dass** wenigstens der Sprachkommunikationsserver (SCS) Nachrichten ohne Aufforderung überträgt.

5. Anordnung zur automatischen Übertragung einer Information zur Inbetriebnahme wenigstens eines ersten, für die Textkommunikation eingerichteten Kommunikationsendgerätes (CL A, CL B) an wenigstens ein zweites, für die Sprachkommunikation eingerichtetes Kommunikationsendgerät (EG A, EG B), mit wenigstens einem Textkommunikationsserver (TCS) zur Vermittlung der Textkommunikation zwischen Kommunikationsendgeräten und wenigstens einem Sprachkommunikationsserver (SCS) zur Vermittlung der Sprachkommunikation zwischen Kommunikationsendgeräten, wobei
wenigstens eine Umsetzungseinrichtung (GW) vorgesehen ist, über die wenigstens der eine Sprachkommunikationsserver (SCS) und der wenigstens eine Textkommunikationsserver (TCS) Nachrichten austauschen, und wobei die Information zur Inbetriebnahme wenigstens des ersten Kommunikationsendgerätes (CL A, CL B) über den wenigstens einen Textkommunikationsserver (TCS), die wenigstens eine Umsetzungseinrichtung (GW) und den wenigstens einen Sprachkommunikationsserver (SCS) an wenigstens das eine zweite Kommunikationsendgerät (EG A, EG B) übertragen wird,
**dadurch gekennzeichnet, dass** die Anordnung derart eingerichtet ist, dass eine Übertragung einer Information zur Signalisierung der Inbetriebnahme zwischen dem Sprachkommunikationsserver (SCS) und dem Textkommunikationsserver (TCS) dann erfolgt, wenn der Sprachkommunikationsserver (SCS) dem Textkommunikationsserver (TCS) zuvor signalisiert hat, dass die Übertragung erfolgen soll.

6. Anordnung nach Anspruch 5, **dadurch gekennzeichnet, dass** die Anordnung derart eingerichtet ist, dass die Übertragung einer Information zur Signalisierung der Inbetriebnahme zwischen dem Sprachkommunikationsserver (SCS) und dem Textkommunikationsserver (TCS) in einem Umfang erfolgt, der durch eine vorherige Signalisierung spezifiziert ist.

7. Anordnung nach einem der vorherigen Ansprüche, **dadurch gekennzeichnet, dass** wenigstens eine an ein weiteres erstes Kommunikationsendgerät (CL A, CL B) übertragene Information zur Signalisierung der Inbetriebnahme wenigstens eine Betriebsinformation beinhaltet.

8. Anordnung nach einem der vorherigen Ansprüche, **dadurch gekennzeichnet, dass** die Anordnung derart eingerichtet ist, dass wenigstens der Sprachkommunikationsserver (SCS) Nachrichten ohne Aufforderung überträgt.

## Claims

1. Method for the automatic transfer of an item of information for the start-up of at least one first communication terminal (CL A, CL B) arranged for text communication, to at least one second communication terminal (EG A, EG B) arranged for speech communication, wherein the speech communication between communication terminals is effected via at least one speech communication server (SCS) and the text communication between communication terminals is effected via at least one text communication server (TCS), wherein the at least one speech communication server (SCS) and the at least one text communication server (TCS) exchange messages via at least one conversion device (GW), and wherein the start-up of at least the one first communication terminal (CL A, CL B) is signalled via the at least one text communication server (TCS), the at least one conversion device (GW), and the at least one speech communication server (SCS) at least to the one second communication terminal (EG A, EG B),
**characterised in that** the transfer of an item of information for the signalling of the start-up between the text communication server (TCS) and the speech communication server (SCS) takes place when the speech communication server (SCS) has signalled beforehand to the text communication server that start-up should take place.

2. Method according to claim 1, **characterised in that** the transfer of the information for the signalling of the start-up between the text communication server (TCS) and the speech communication server (SCS) takes place in a scope which has been specified by a previous signalling.

3. Method according to any one of the preceding claims, **characterised in that** the method comprises the transfer of at least one item of information for signalling the start-up to a further first communication terminal (CL A, CL B).

4. Method according to any one of the preceding claims, **characterised in that** at least the speech communication server (SCS) transfers messages without request.

5. Arrangement for the automatic transfer of an item of information for the start-up of at least one first communication terminal (CL A, CL B) arranged for text communication, to at least one second communication terminal (EG A, EG B) arranged for speech communication, with at least one text communication server (TCS) for transferring the text communication between communication terminals and at least one speech communication server (SCS) for the transfer of speech communication between communication terminals, wherein at least one conversion device (GW) is provided, via which the at least one speech communication server (SC) and the at least one text communication server (TCS) exchange messages, and wherein the information for the start-up of at least the first communication terminal (CL A, CL B) is transferred via the at least one text communication server (TCS), the at least one conversion device (GW), and the at least one second communication terminal (EG A, EG B), **characterised in that** the arrangement is set up in such a way that a transfer of an item of information for signalling the start-up between the speech communication server (SCS) and the text communication server (TCS) takes place when the speech communication server (SCS) has signalled to the text communication server (TCS) beforehand that the transfer should take place.

6. Arrangement according to claim 5, **characterised in that** the arrangement is set up in such as way that the transfer of an item of information for signalling the start-up between the speech communication server (SCS) and the text communication server (TCS) takes place in a scope which has been specified by a previous signalling.

7. Arrangement according to any one of the preceding claims, **characterised in that** at least one item of information transferred to a further first communication terminal (CL A, CL B) for the signalling of the start-up contains at least one item of operational information.

8. Arrangement according to any one of the preceding claims, **characterised in that** the arrangement is set up in such a way that at least the speech communication server (SCS) transfers messages without request.

## Revendications

1. Procédé servant à la transmission automatique d'une information relative à la mise en service au moins d'un premier terminal de communication (CL A, CL B) mis au point pour la communication de texte à au moins un deuxième terminal de communication (EG A, EG B) mis au point pour la communication de voix, dans le cadre duquel la communication de voix entre des terminaux de communication a lieu par l'intermédiaire d'au moins un serveur de communication de voix (SCS) et où la communication de texte entre des terminaux de communication est effectuée par l'intermédiaire d'au moins un serveur de communication de texte (TCS), sachant que le serveur de communication de voix (SCS) au moins au nombre de un et le serveur de communication de texte (TCS) au moins au nombre de un échangent des messages par l'intermédiaire d'au moins un système de mise en oeuvre (GW), et sachant que la mise en service d'au moins le premier terminal de communication (CL A, CL B) est signalée par l'intermédiaire du serveur de communication de texte (TCS) au moins au nombre un, par le système de mise en oeuvre (GW) au moins au nombre de un et le serveur de communication de voix (SCS) au moins au nombre de un, au deuxième terminal de communication (EG A, EG B), **caractérisé en ce qu'**une transmission d'une information relative à la signalisation de la mise en service entre le serveur de communication de texte (TCS) et le serveur de communication de voix (SCS) a lieu lorsque le serveur de communication de voix (SCS) a signalé au préalable au serveur de communication de texte que la mise en service doit avoir lieu.

2. Procédé selon la revendication 1, **caractérisé en ce que** la transmission de l'information servant à signaler la mise en service a lieu entre le serveur de communication de texte (TCS) et le serveur de communication de voix (SCS) dans une mesure donnée qui a été spécifiée par une signalisation préalable.

3. Procédé selon l'une quelconque des revendications précédentes, **caractérisé en ce que** le procédé comprend la transmission d'au moins une information servant à signaler la mise en service à un autre premier terminal de communication (CL A, CL B).

4. Procédé selon l'une quelconque des revendications précédentes, **caractérisé en ce qu'**au moins le serveur de communication de voix (SCS) transmet des messages sans instruction.

5. Ensemble servant à transmettre de manière automatique une information relative à la mise en service d'au moins un premier terminal de communication (CL A, CL B) mis au point pour la communication de texte à au moins un deuxième terminal de communication (EG A, EG B) mis au point pour la communication de voix, comprenant au moins un serveur de communication de texte (TCS) pour le transfert de la communication de texte entre des terminaux de communication et au moins un serveur de communication de voix (SCS) pour le transfert de la communication de voix entre des terminaux de communication, sachant
qu'au moins un système de mise en oeuvre (GW) est prévu, sur lequel le serveur de communication de voix (SCS) au moins au nombre de un et le serveur de communication de texte (TCS) au moins au nombre de un échangent des messages, et sachant que l'information relative à la mise en service d'au moins le premier terminal de communication (CL A, CL B) est transmise, par l'intermédiaire du serveur de communication de texte (TCS) au moins au nombre de un, le système de mise en oeuvre (GW) au moins au nombre de un et le serveur de communication de voix (SCS) au moins au nombre de un, au deuxième terminal de communication (EG A, EG B) au moins au nombre de un,
**caractérisé en ce que** l'ensemble est mis au point de telle manière qu'une transmission d'une information relative à la signalisation de la mise en service est alors effectuée entre le serveur de communication de voix (SCS) et le serveur de communication de texte (TCS) lorsque le serveur de communication de voix (SCS) a signalé au préalable au serveur de communication de texte (TCS) que la transmission doit avoir lieu.

6. Ensemble selon la revendication 5, **caractérisé en ce que** l'ensemble est mis au point de telle manière que la transmission d'une information relative à la signalisation de la mise en service a lieu entre le serveur de communication de voix (SCS) et le serveur de communication de texte (TCS) dans une mesure qui est spécifiée par une signalisation préalable.

7. Ensemble selon l'une quelconque des revendications précédentes, **caractérisé en ce qu'**au moins une information transmise à un autre premier terminal de communication (CL A, CL B) relative à la signalisation de la mise en service comporte une information de fonctionnement.

8. Ensemble selon l'une quelconque des revendications précédentes, **caractérisé en ce que** l'ensemble est mis au point de telle manière qu'au moins le serveur de communication de voix (SCS) transmet des messages sans instruction.
